# EUROPEAN PATENT APPLICATION

(11) **EP 0 726 517 A1**
(43) Date of publication of application: **14.08.1996**
(21) Application number: 96101603.7
(22) Date of filing: 05.02.1996
(51) Int. Cl.: G06F 9/44

(54) **A computer aided program generating system**

(30) Priority: 10.02.1995 JP 23178/95
(71) Applicant: SUNRISE SYSTEM CO., LTD., Chuo-ku, Tokyo (JP)
(72) Inventor: Iwata, Tomotake, Yono-shi, Saitama (JP); Jiang, Weiguo, Yono-shi, Saitama (JP); Fujiwara, Shigeru, Ohmiya-shi, Saitama (JP); Obata, Toshio, Chiba-shi, Chiba (JP); Oikawa, Kenji, Yokohama-shi, Kanagawa (JP); Kosaka, Kiyoshi, Kawasaki-shi, Kanagawa (JP)
(74) Representative: Blumbach Weser Bergen Kramer Zwirner Hoffmann Patentanwälte

(57) **Abstract**

A computer-aided program generating system takes as inputs a "file organization", a "file access method" and a "process function" for a desired "file description" (FD). The inputs are used to select a "Paradigm Connection Logic" (PCL) from a repository of prefedined PCLs: this PCL is then edited according to the FD, resulting in a source code outline to which detail can be added in the form of an SPS (Single Process Segment) to derive the final source code.

## Description

The present invention relates to a computer aided program generating system for supporting effective generation of a program.

Conventionally various proposals have been made for a computer aided program generating system. However, any complete computer aided program generating system is not yet developed.

Therefore, an object of the present invention is to provide a computer aided program generating system which can break through the current state of development and in which the efficiency of program generation can be remarkably improved.

For achieving the above object, a computer aided program generating system for supporting generation of a program according to the present invention includes means for inputting a file organization, means for inputting a file access method, means for inputting a process function, and PCL search and output means for searching and outputting a PCL based on said input file organization, file access method and process function.

In the present invention, the computer aided program generating system may further include means for inputting a file configuration.

In the program generation supporting system of the present invention, said input file organization, file access method and process function may be input to said file configuration.

In the computer aided program generating system according to the present invention, said process function may be specified for said file configuration.

In the computer aided program generating system according to the present invention, said process function may be specified for said file configuration.

In the computer aided program generating system according to the present invention, wherein said process function may be specified for said file configuration.

According to the present invention, a program can be created with high efficiency. Further, the terms used in the program can be standerized so that the maintenance of a system becomes easy.

The above and other objects, effects, features and advantages of the present invention will become more apparent from the following description of embodiments thereof taken in conjunction with the accompanying drawings.
Fig. 1 is a flow chart showing the outline of the present invention;
Fig. 2 is a flow chart showing the outline of the present invention;
Fig. 3 is a diagram for producing of an SYS configuration diagram;
Fig. 4 is a screen display for producing of a WL;
Fig. 5 is a screen display for producing of an FD;
Fig. 6 is a screen display for producing of an FD for a screen display;
Fig. 7 is a diagram for explaining the designation of a PCL;
Fig. 8 is a screen display for designating of a file organization and a file access method for the PCL;
Fig. 9 is a screen display for designating of a process function for the PCL; and
Fig. 10 is a screen display for producing of an SPS.

The present invention will be described in detail with reference to the drawings.

First, terms and the meanings used in the description of the present invention will be described below.

### (1) PCL (Paradigm Connection Logic)

This is a main portion of the present invention and automatically generated by designating "a process function", "a file organization", and "a file access method". A program is created by combining this PCL and an SPS to be described later.

### (2) SPS (Single Process Segment)

This is used to designate a process function which cannot be specified by the PCL automatically generated. The process function designated by the SPS is a minimum unit which can be specified as a single process. The process functions are specified to complete a whole work process.

### (3) WL (Word List)

This is used to associate terms used in a work process with the terms used in a program to store in a list.

### (4) FD (File Definition)

This defines the content of each of files used in a work process and not only files stored in an external storage unit such as a disk unit but also screen displays on a display terminal and forms to be printed are included in the FD. The content of a file is defined in accordance with data items (records, etc.) to be contained in the file.

### (5) SYS configuration diagram (System Architecture)

This indicates the analysis result of a work process flow and specifies the input and output operations for a file and functions during the input and the output operations. The FD and the PCL are created based on the SYS configuration diagram.

### 〈Description of an Embodiment〉

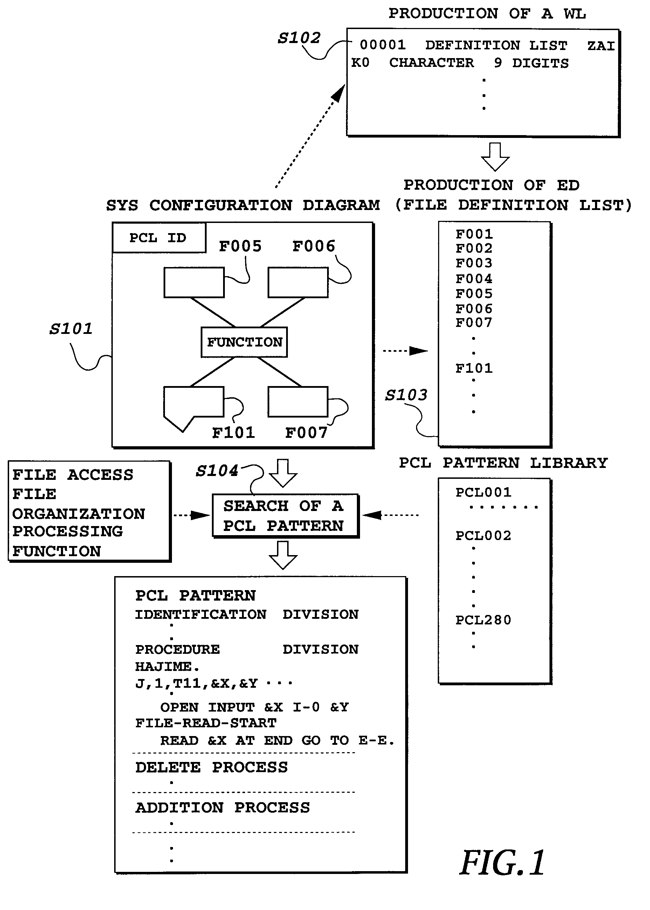

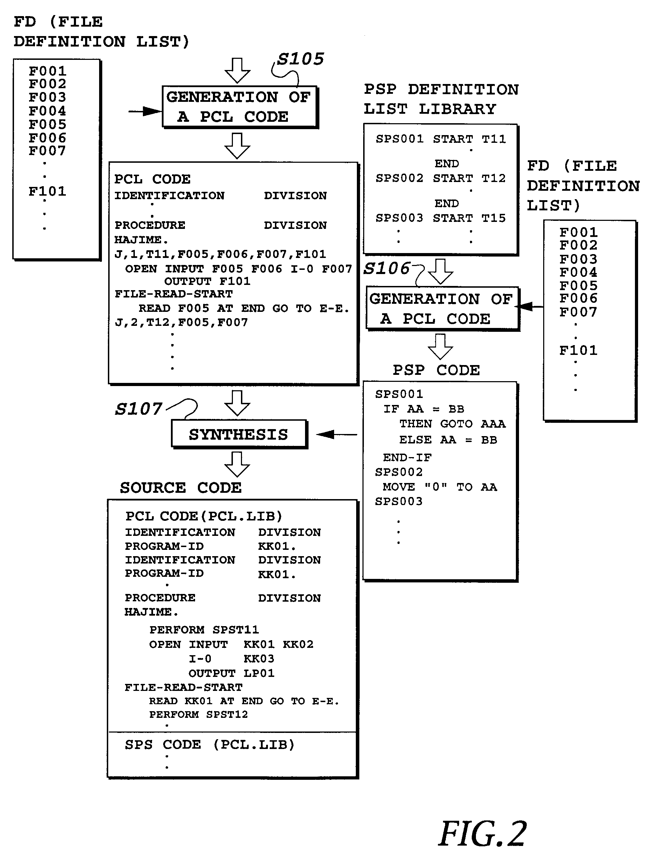

A procedure in the embodiment of the present invention will be explained based on Figs. 1 and 2.

When a program for a process is to be generated, the flow of a process is first analyzed to recognize forms and process functions required. Then, an SYS configuration diagram is produced based on the recognized process flow (S101).

Based on the SYS configuration diagram, terms appearing in the forms which are used in the business process are chosen and input. The terms of business are associated with terms to be used in the program to complete a WL (word list) (S102). For instance, in a case that a program is created for a salary calculating process, terms for various items such as "base pay", "officer allowance", "family allowance", "work allowance", "hausing allowance", "commuting allowance", "overtime pay", and "social insurance premium" are chosen and input to associate them with terms used in the program. The production of the WL will be described in detail later.

Next, an FD is produced to define files required for the process based on the process analysis using the produced WL (S103). Not only files stored in an external storage unit such as a disk unit but also screen displays on a display terminal and forms to be printed are included in the FD. The FD will be also described in detail later.

Next, a PCL (Paradigm Connection Logic) is designated by designating a file access method, a file organization, and a process function (S104).

Next, a PCL pattern is searched and specified from a PCL library based on the file access method, the file organization, and the process function. A PCL code is produced from the specified PCL pattern using the FD corresponding to the specified PCL pattern (S105). The PCL code represents a final source code for the outline of functions of the work process and a portion of functions which cannot be represented in the PCL code is output with a mark. The PCL will be also described in detail later.

An SPS (Single Process Segment) is produced for the portion of the process functions which cannot be represented only by the designation of PCL (S106). This will be also described in detail later.

A final source program can be produced by combining the SPS and the PCL. The source program is compiled to produce an object program which can be executed on a computer.

### 〈Production of a SYS configuration diagram〉

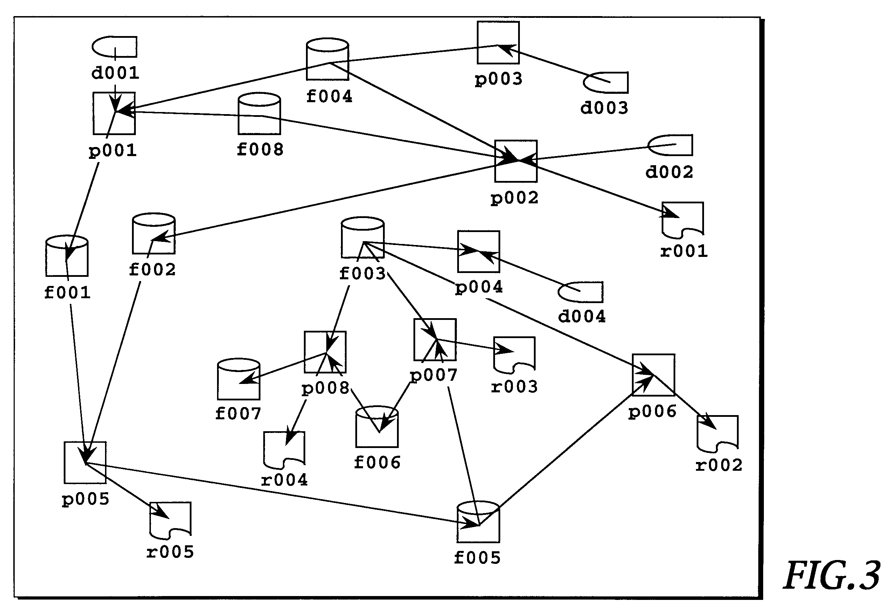

The production of a SYS configuration diagram will be described with reference to Fig. 3. The SYS configuration diagram is produced by selecting one of figures (a file on a magnetic disk, a screen of a display terminal, printing paper, etc.) prepared on a screen with a mouse. The analysis result of the process flow is divided into input/output operation to a file and a function. Figures are chosen and connected with lines. According to the analysis of the process, the SYS configuration diagram is produced. In Fig. 3, references d001 to d004 denote screens, references f001 to f008 denotes files on an external storage unit, references r001 to r005 denote forms to be printed, and references p001 to p008 denote functions. When the figures prepared on a display screen are sequentially designated with the mouse, continuous numbers are automatically assigned to them and they are displayed on a screen. The SYS configuration diagram can be produced by connecting the figures assigned with the numbers with lines. The FD and PCL are produced based on the SYS configuration diagram.

### 〈Production of a WL〉

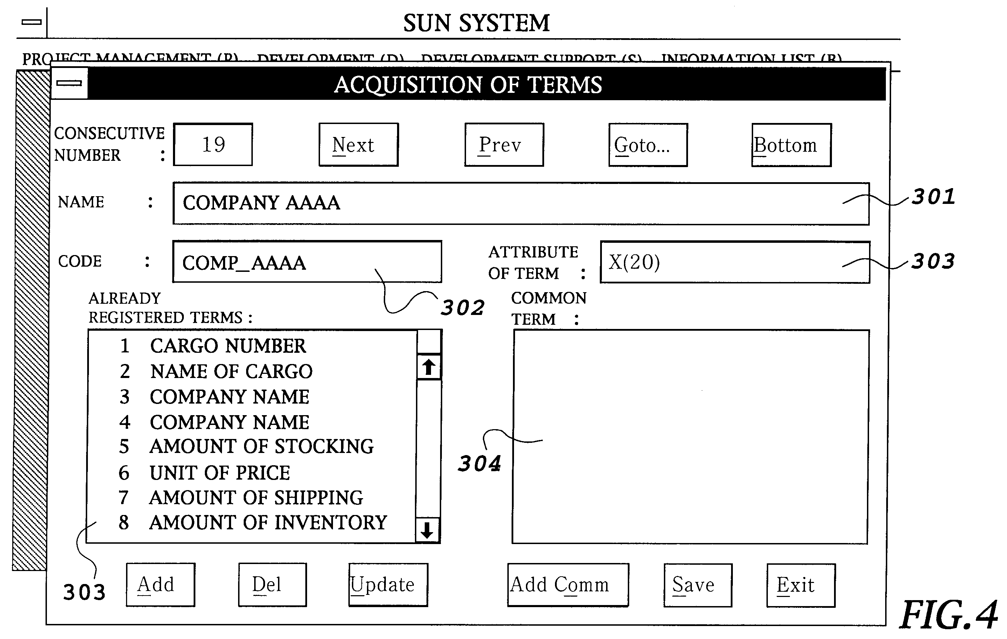

The production of a WL will be described with reference to Fig. 4. The WL is initially created to standardize the terms used in this system and used as a data base. Fig. 4 shows an input mode display when the WL is created. A name 301 is a general name used in the business. A code 302 is one used in the program. A term attribute designates an attribute such as character, digit, the number of digits. A registered term is displayed in a list of already registered terms 303 for confirmation. A term commonly used in various business can be registered in a list of common terms 304 and can be used in each of the processes by copying the list of common terms 304. In this manner the same terms can be used in different processes.

### 〈Production of an FD〉

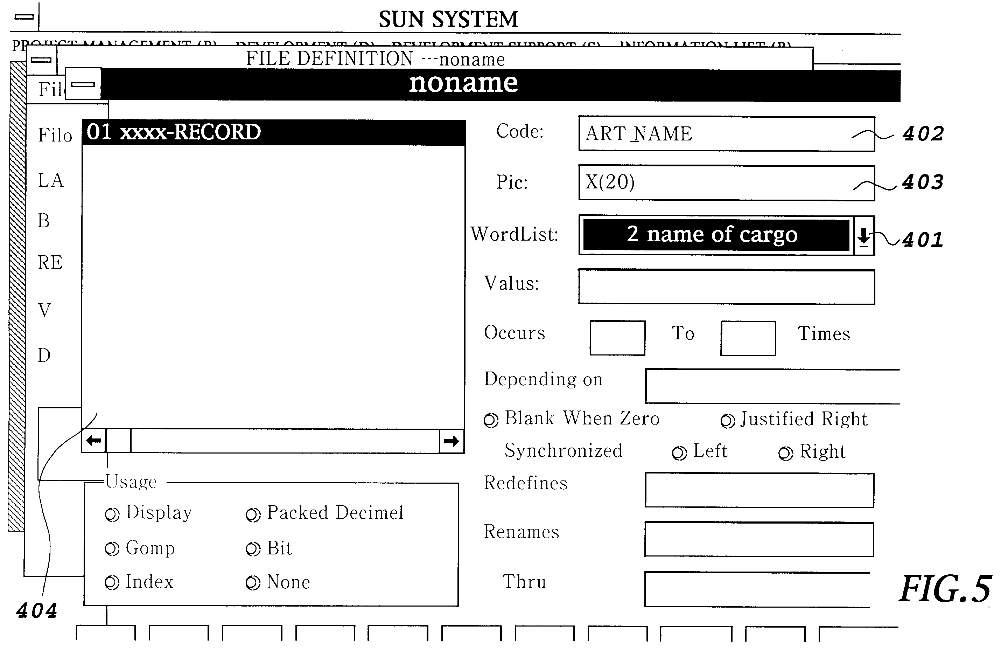

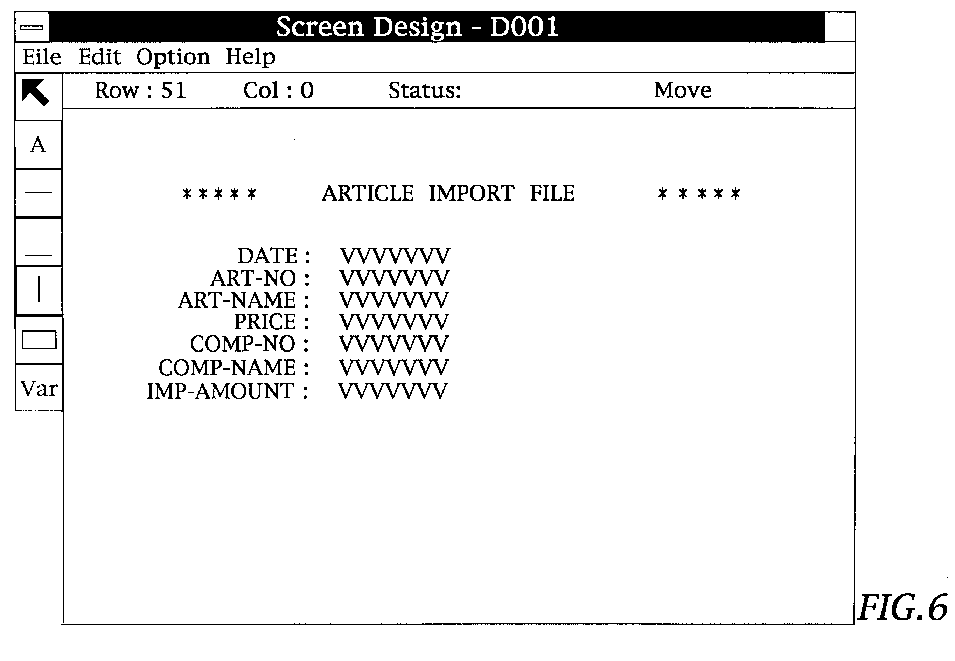

The production of an FD will be described with reference to Figs. 5 and 6. The FD is produced to form the content of files (including screen displays and forms to be printed) using the WL.

Fig. 5 shows a display in the production of a FD. In this display, a WL is displayed with a name (a term used in a normal business) by a reference numeral 401. If this is selected, this item is set as a record of a FD. A code of the name (shown by a reference numeral 402) and an attribute thereof (shown by a reference numeral 403) are automatically extracted and stored in the FD. The FD on the way of production is displayed as shown by a reference numeral 404.

Fig. 6 shows an example of screen display when a FD is produced. This shows a screen display in which a corresponding code and attribute are displayed after a name is designated. The attribute is displayed as "Vs" and the number of characters designated by the attribute is also displayed.

In this manner, the content of a file can be inputted by selecting a file configuration (including screen displays and forms to be printed) using the terms of the usual business.

### 〈Designation of a PCL〉

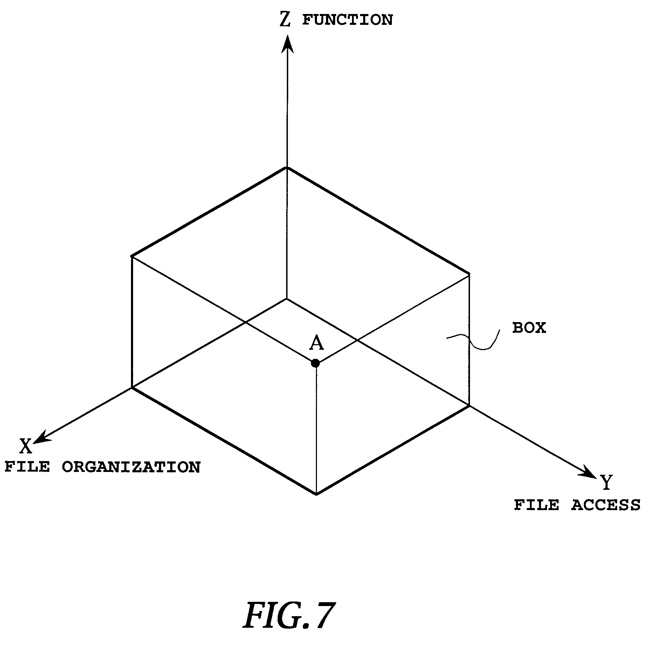

Since the FD (an input/output file) as a processing objective is designated from the above SYS configuration diagram, PCL designates a file organization, file access method and process function for the FD. In Fig. 7, if the file organization, file access method, and process function are assigned to X-, Y-, and Z-axes, respectively, the designation of the PCL corresponds to a cross point A determined by the values on the three axes. A specific PCL pattern is searched from among PCL patterns prepared in the system in advance, using as a key the designated file organization, file access method and process function. The PCL pattern searched is edited again using the above designated FD and outputted as a PCL code. For this reason, the process on the file is contained in the PCL code with a complete form. Since the outline of process function has been constructed in the PCL code, the detail of fine process functions are defined in a SPS form, so that a source code can be completed.

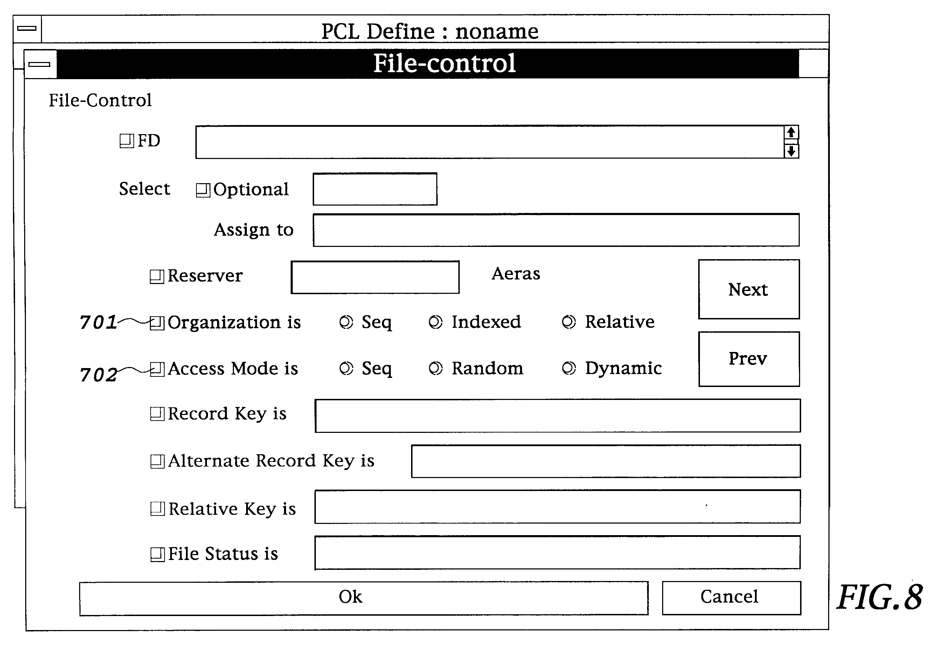

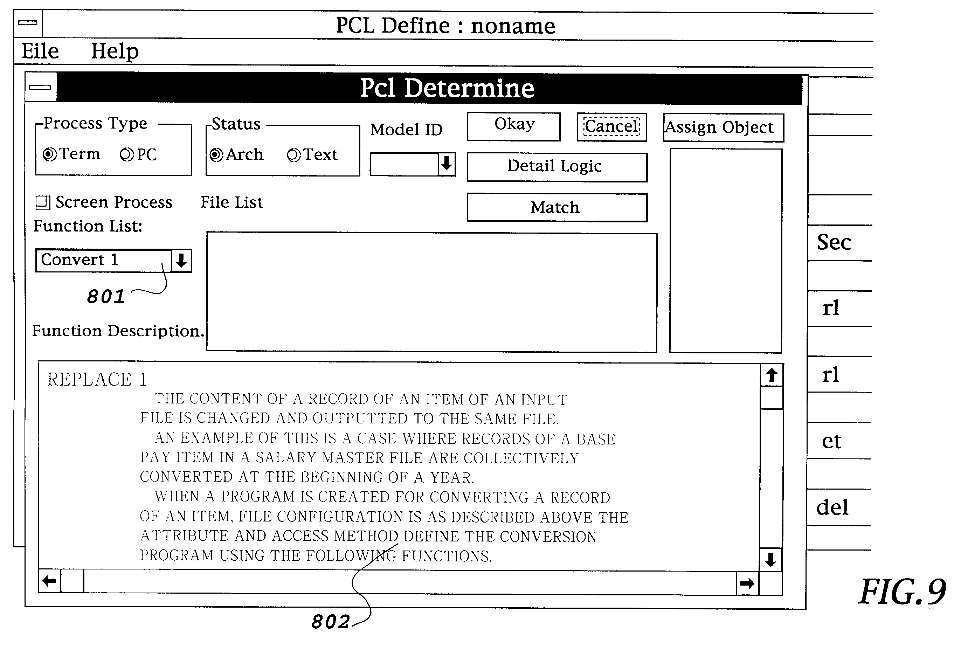

Next, an example in which the designation of PCL will be described with reference to Figs. 8 and 9.

In the definition of PCL, a format and access method for the FD defined from the SYS configuration diagram are defined. This is shown in Fig. 8. In Fig. 8, the file organization and file access method are selected and designated by reference numerals 701 and 702, respectively. In Fig. 8, one of the sequential (Seq), index (Index), and relative (Relative) is selected and designated as the file organization. However, the file organization is not limited to this. A various file organizations may be designated. Further, in Fig. 8, one of sequential (Seq), random (Random), and relative (Relative) is selected and designated as the file access method. However, the file access method is not limited to this. A various file access methods (for example, relational method) may be designated.

Next, the process function is designated. This is shown in Fig. 9. As shown in reference numeral 801 of Fig. 9. the designation of process function is performed by displaying functions already registered in the system and then selecting a specific one from among these functions. The selection can be easily done because the descriptions of the functions to be selected are displayed as shown in reference numeral 802.

A list of functions which can be designated for PCL is shown in table 1.

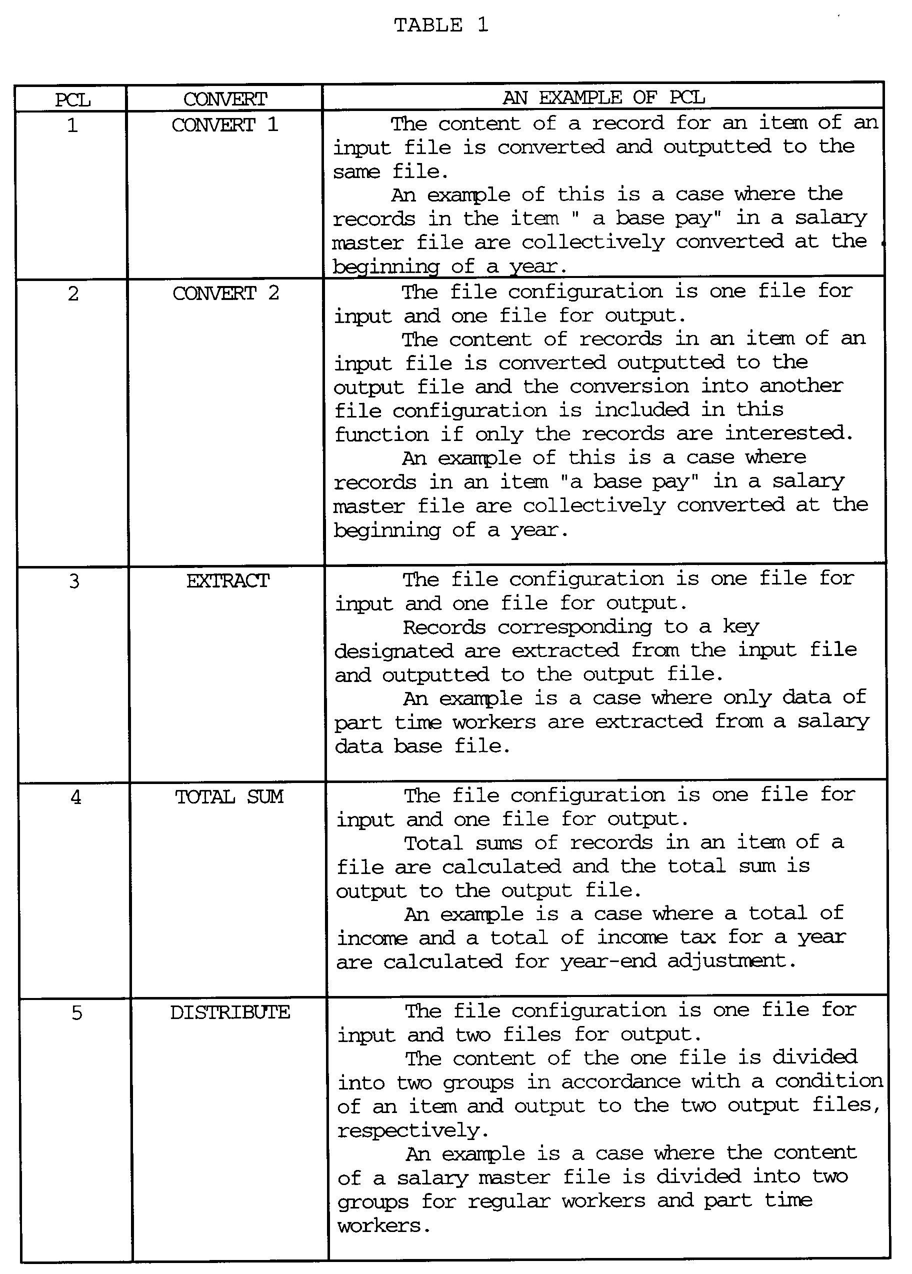

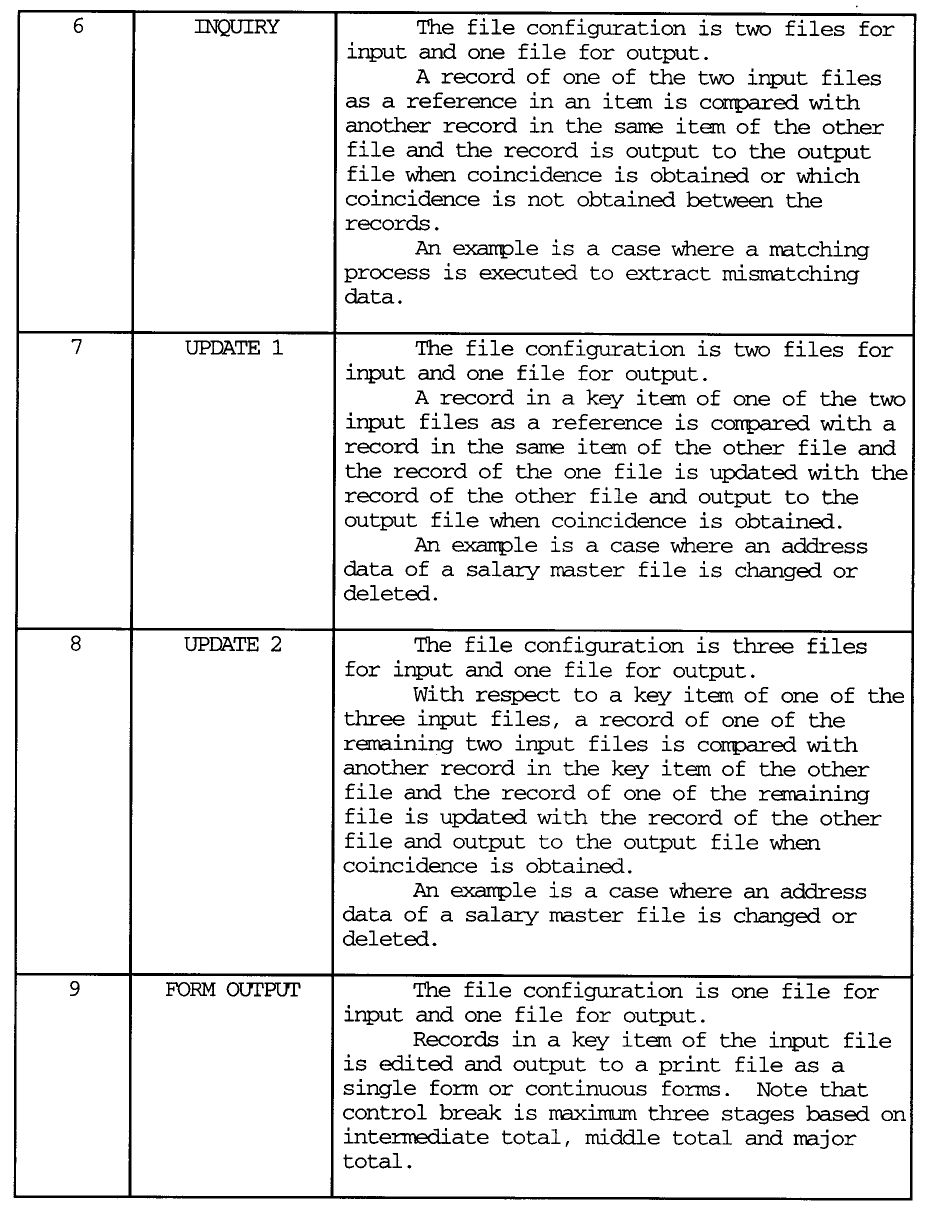

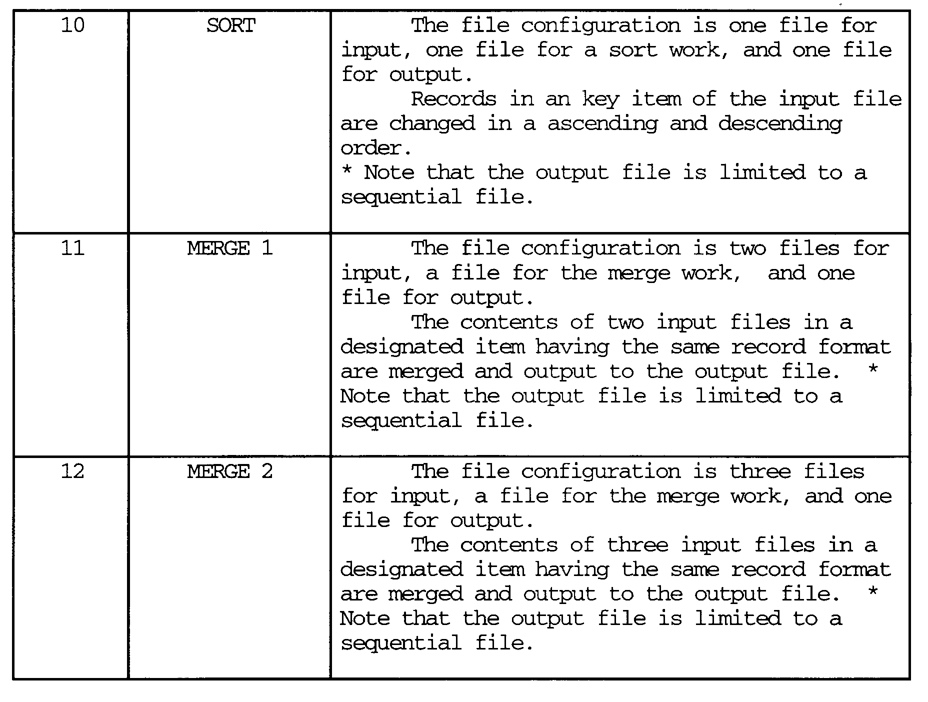

As shown in the table 1, 12 major functions are assumed in the embodiment. These functions have been obtained as a result that the processes usually used in the application were analyzed. However, the major functions are not limited to the above 12 functions.

The PCL patterns are registered in a PCL pattern library which is provided by this system, by defining processes for the functions. The specific PCL pattern is searched from among the registered PCL patterns by specifying a file organization, a file access method, and a process function. The definition of FD is incorporated in the PCL code and the PCL code is generated for the searched PCL pattern.

The present invention does not depend upon a specific language and can create the PCL code of, for example, FORTRAN language, BASIC language, and C language. Since the PCL code is specified only by the file organization, file access method and process function, the PCL code performs mainly the processes for a file. With the detailed process, J (Join) is displayed at a position where a code for the process is generated, and next, the position where the code is to be buried is specified by an SPS. Then the SPS is combined at the position to complete a final source code.

### 〈Production of an SPS〉

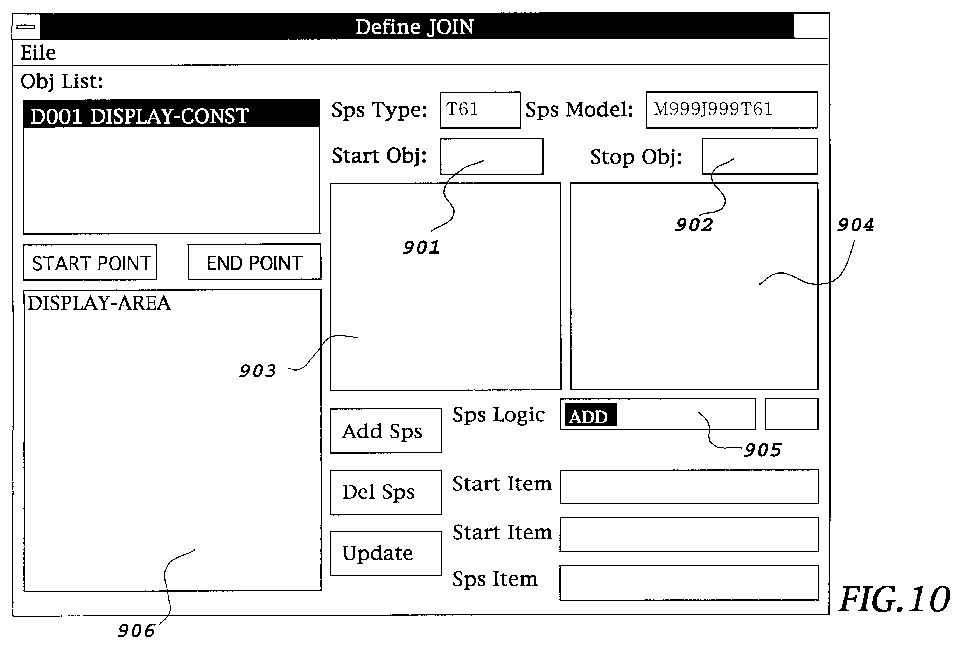

The SPS is a minimum unit of the process and the program for the application is completed by defining a process which cannot be specified by the PCL, using the SPS. As shown in Fig. 10, in this definition, a FD is displayed (901, 902), and a data included in the FD is displayed (903). By selecting this, object for the process is specified. The function for this data, i.e., the SPS is selected at 905. The data to be processed is designated using the displayed FD data (904). Since the FD for input/output is already defined in the SYS configuration diagram and the PCL, any detailed object to be processed is not necessary to be inputted. Further, the function for the data can be specified by not a specific code of a program language but a code representative of a general process as in the SPS, and therefore the process can be readily specified. The SPS is provided by the system. The SPS is shown in accordance with classification of the processes. The process is defined using the SPS.

The SPS is executed at the position of the PCL for the process where the Join is written.

### 〈Post Processing〉

The SPS and the PCL are combined to create the source program. Examples in which PCL and SPS are combined to a COBOL program is created are shown in tables 2. In the examples shown in these tables, a position where J (Join) is indicated in the "PROCEDURE DIVISION" is a position for the SPS to be defined and the SPS is shown in "SPS SECTION".

The source program is compiled and executed for debugging. If there is any error, a position where the error is caused is determined and the program generator is made again from the designation of PCL or the production of SPS such that a source program is newly generated and compiled.

In the examples, COBOL programs are generated as a source program. However, the present invention can be applied to any program language and the language of finally created source program is not limited to the COBOL language.

As described above, according to the present invention, the process for a file which requires the long term to created is automatically created. Therefore, a program can be readily created for a file process. In this system, since the file organization and file access method can be readily changed, the change of the system can be flexibly performed. Further, If PCL and SPS are provided for various system configurations and various program languages, the system for supporting the program generation can be realized for these system configurations and program languages. For this reason, the efficiency can be improved greatly compared to the conventional system.

The present invention has been described in detail with respect to preferred embodiments, and it will now be that changes and modifications may be made without departing from the invention in its broader aspects, and it is the intention, therefore, in the appended claims to cover all such changes and modifications as fall within the true spirit of the invention.

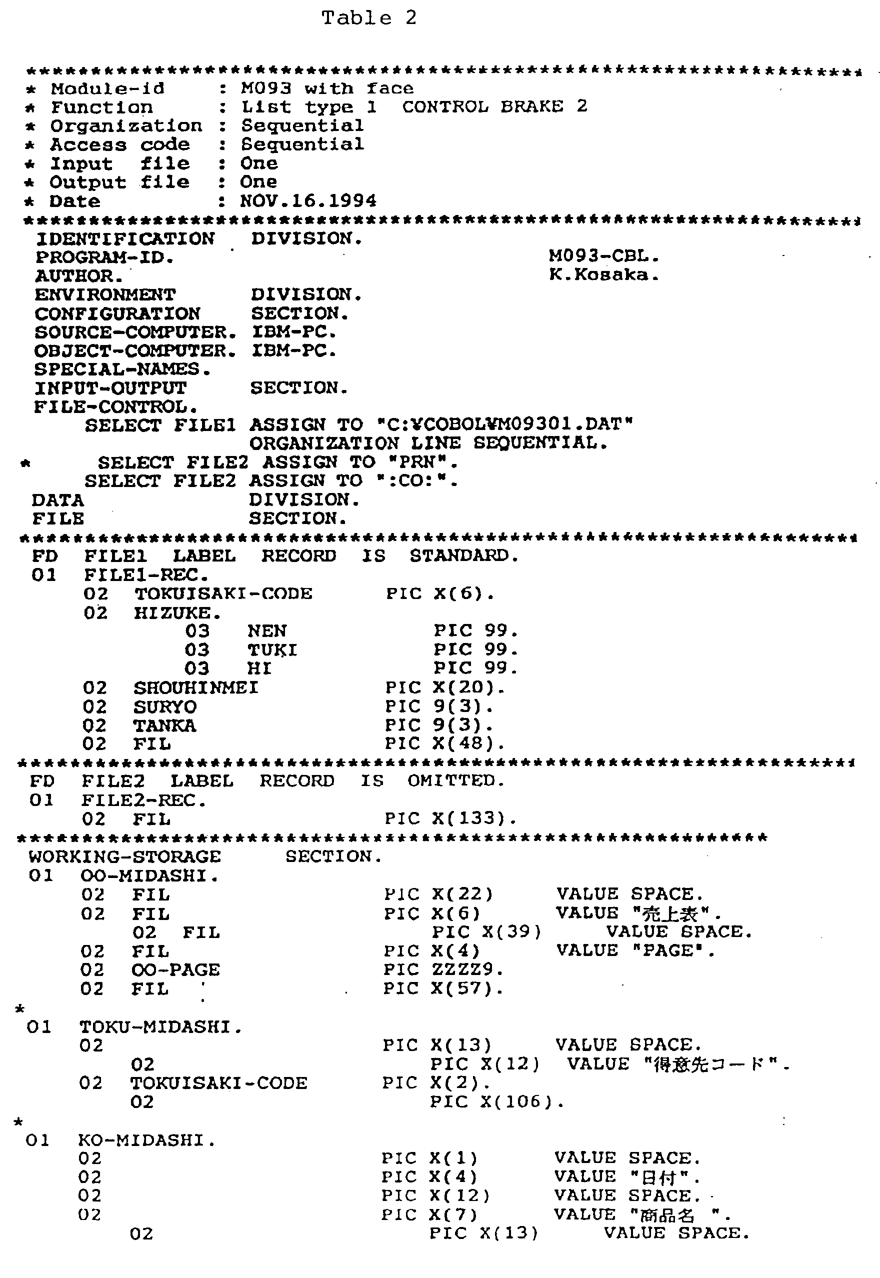

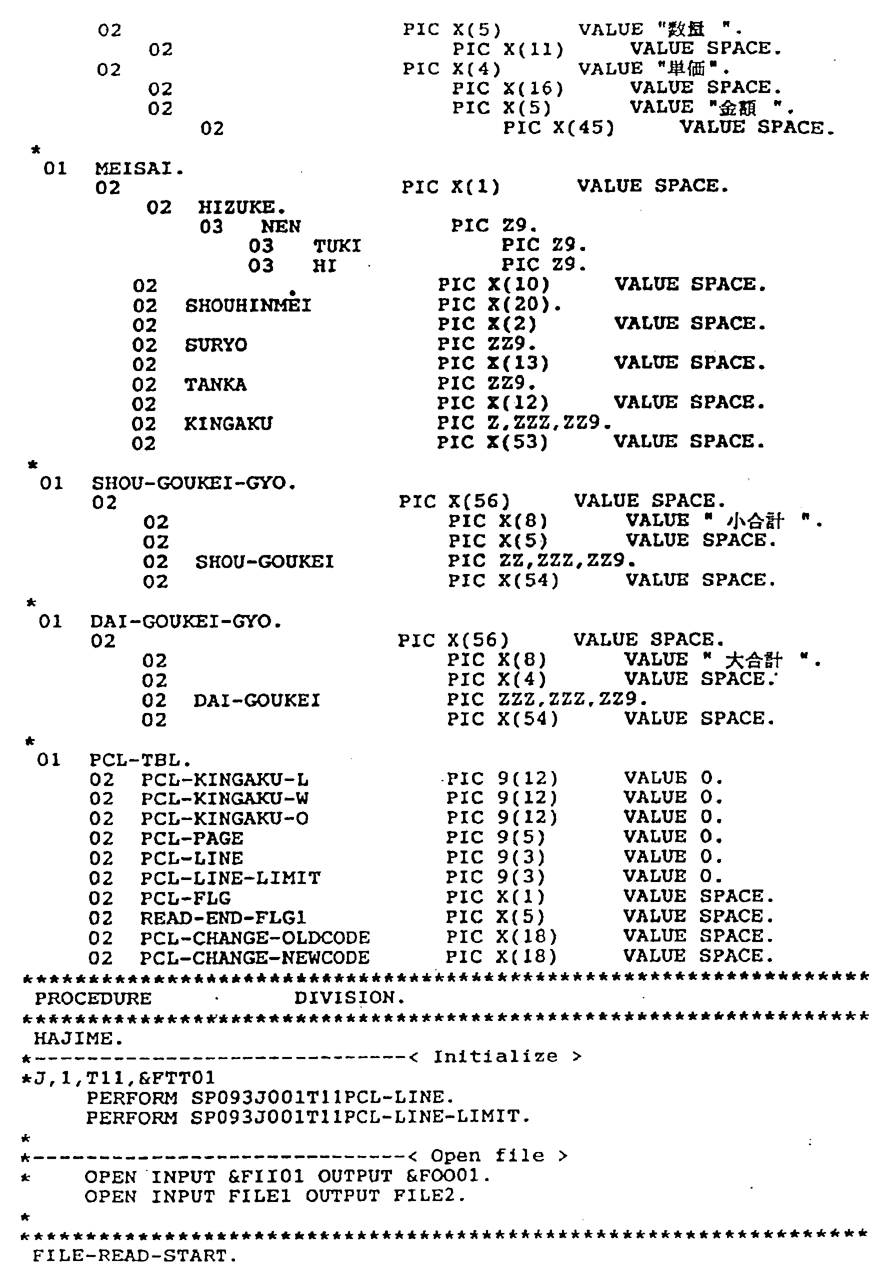

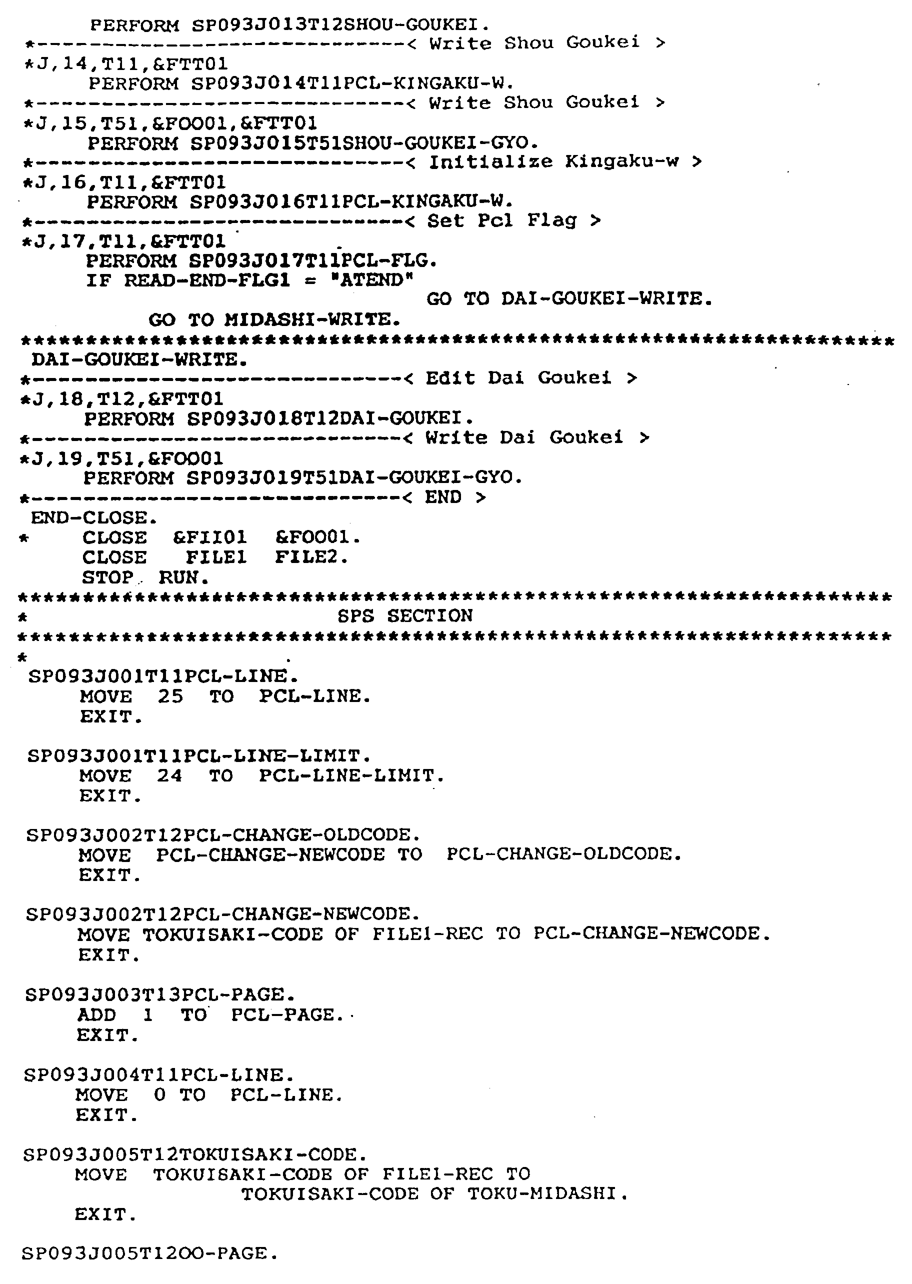

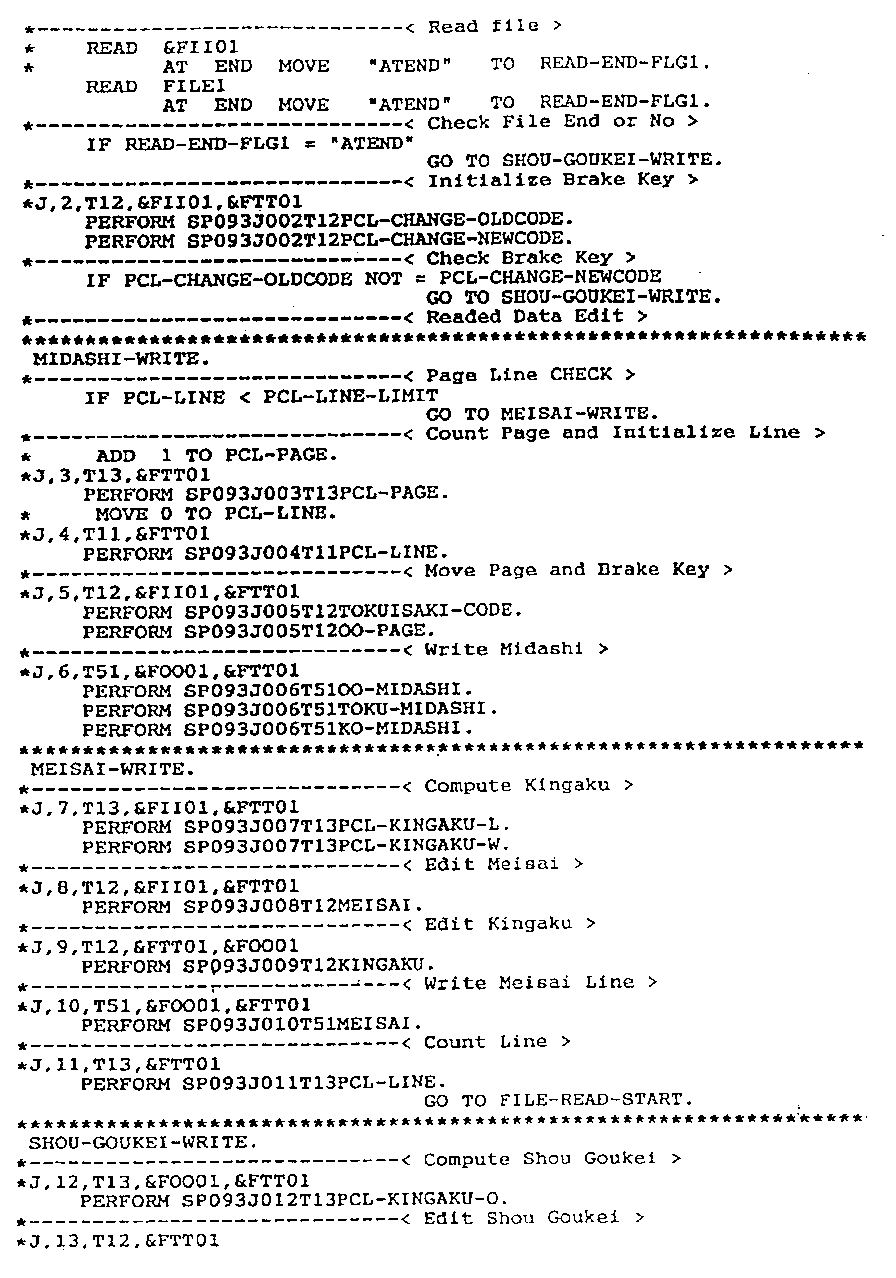

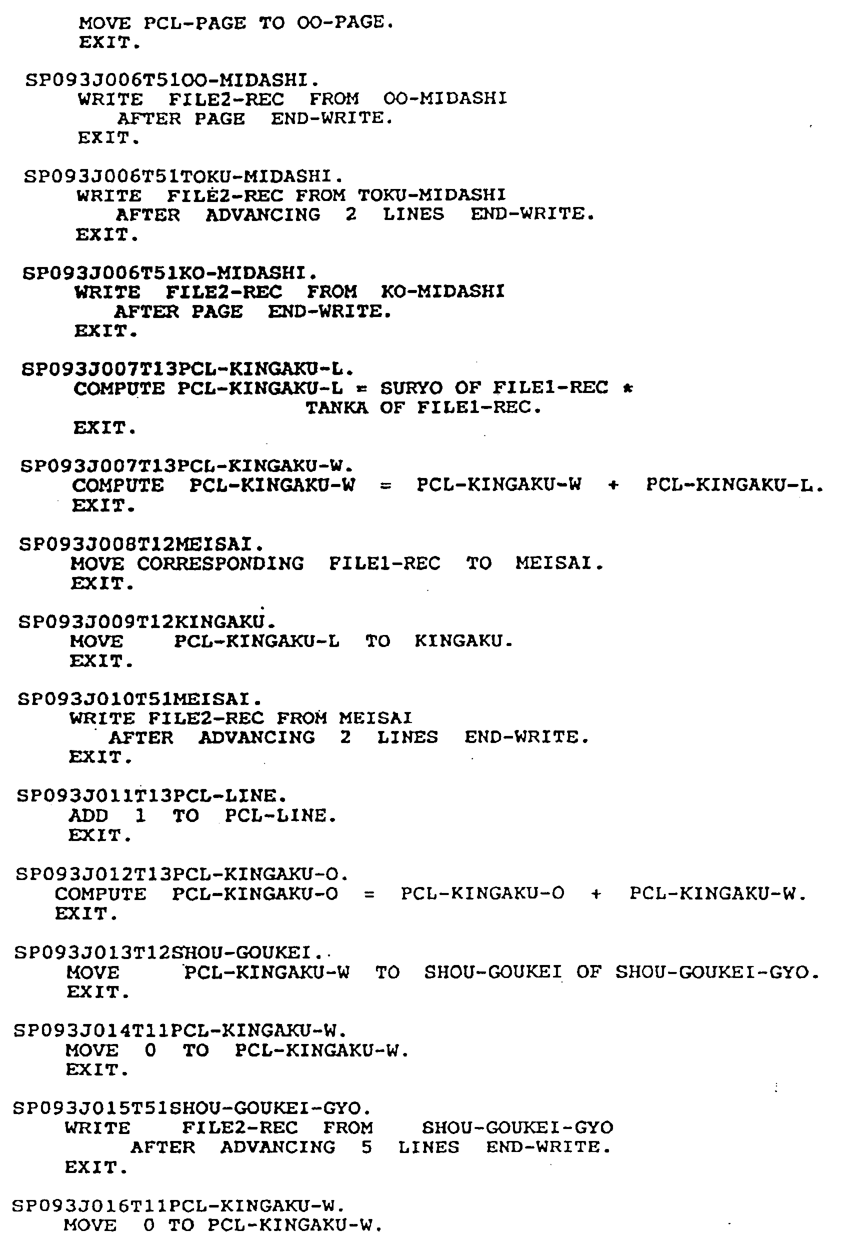

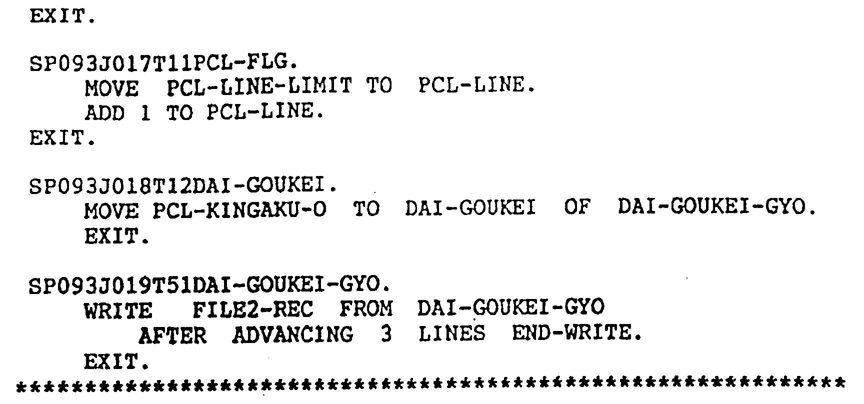

## Claims

1. A program generation supporting system for supporting generation of a program, characterized by comprising:
means for inputting a file organization;
means for inputting a file access method;
means for inputting a process function;
PCL search and output means for searching and outputting a PCL based on said input file organization, file access method and process function.

2. A program generation supporting system as claimed in claim 1, further characterized by comprising means for inputting a file configuration.

3. A program generation supporting system as claimed in claim 2, characterized in that said input file organization, file access method and process function are input to said file configuration.

4. A program generation supporting system as claimed in claim 2, characterized in that said process function is specified for said file configuration.

5. A program generation supporting system as claimed in claim 3, characterized in that said process function is specified for said file configuration.

6. A program generation supporting system as claimed in claim 2, characterized in that said process function is specified for said file configuration.
